# EUROPÄISCHE PATENTSCHRIFT

(11) **EP 2 171 868 B1**
(45) Veröffentlichungstag und Bekanntmachung des Hinweises auf die Patenterteilung: **14.09.2011**
(21) Anmeldenummer: 08773566.8
(22) Anmeldetag: 20.06.2008
(51) Int. Cl.: H04B 5/00

(54) **KAPAZITIVE DATENÜBERTRAGUNG**
CAPACITIVE DATA TRANSMISSION
TRANSMISSION DE DONNÉES CAPACITIVE

(30) Priorität: 25.06.2007 DE 102007029114
(43) Veröffentlichungstag der Anmeldung: 07.04.2010
(73) Patentinhaber: Giesecke & Devrient GmbH, 81677 München (DE)
(72) Erfinder: FINKENZELLER, Klaus, 85774 Unterföhring (DE)
(74) Vertreter: Klunker . Schmitt-Nilson . Hirsch
(86) Internationale Anmeldenummer: PCT/EP2008/005019
(87) Internationale Veröffentlichungsnummer: WO 2009/000479

(56) Entgegenhaltungen:
- WO-A-00/41333
- US-A1- 2007 024 425

## Beschreibung

Die Erfindung betrifft ein Verfahren zur Datenübertragung zwischen einem Lesegerät und einem portablen Datenträger mittels kapazitiver Kopplung sowie einen derartigen portablen Datenträger. Die Datenübertragung dient dabei vorzugsweise der Initialisierung und/oder Personalisierung des Datenträgers durch das Lesegerät.

Ein portabler Datenträger umfasst zur Kommunikation mit einem Lesegerät eine Datenkommunikationsschnittstelle. Diese kann beispielsweise mittels Kontaktflächen für eine kontaktbehaftete Datenübertragung eingerichtet sein. Andere Datenträger verfügen alternativ oder zusätzlich über Datenkommunikationsschnittstellen, die für eine kontaktlose Datenübertragung eingerichtet sind. Eine solche Datenübertragung kann mittels induktiver oder kapazitiver Kopplung erfolgen, z.B. mittels Datenträgern nach ISO/IEC 14443 bzw. ISO/IEC 10536. Dementsprechend verfügt ein solcher Datenträger über eine geeignete Datenkommunikationsschnittstelle in Form einer Antenne oder in Form von kapazitiven Koppelflächen.

Eine Reihe von portablen Datenträgern benötigt für den normalen Betrieb überhaupt keine Datenkommunikationsschnittstelle, da eine Datenkommunikation eines solchen Datenträgers mit einem Lesegerät während des Betriebs des Datenträgers nicht vorgesehen ist. Beispielsweise dient eine Chipkarte mit Display, die als Einmalpasswort-Generator (OTP-Generator, abgeleitet von "One Time Password") eingesetzt wird, dem Erzeugen von Pseudozufallszahlen, welche dann zum Sichern einer Datenübertragung eingesetzt werden, die mittels anderer, nicht mit dem Einmalpasswort-Generator gekoppelten Einrichtungen durchgeführt wird.

Aber auch ein solcher Datenträger muss initialisiert und für einen Endnutzer personalisiert werden. Dazu ist es notwendig, entsprechende Initialisierungs- und Personalisierungsdaten in den Datenträger einzubringen. Einerseits kann der Datenträger dazu mit einer speziellen Datenkommunikationsschnittstelle ausgestattet werden, die jedoch im Betrieb des Datenträgers nicht mehr benötigt wird. Wird bei der Herstellung des Datenträgers auf eine solche Datenkommunikationsschnittstelle verzichtet, um Aufwand und Kosten zu sparen, so kann es im Allgemeinen nicht vermieden werden, dass der Datenträger bei einem Initialisierungs- oder Personalisierungsvorgang leicht beschädigt wird. Dies geschieht beispielsweise dann, wenn mit Hilfe von Nadeln oder dergleichen ein Zugang zu Anschlussleitungen eines Halbleiterchips des Datenträgers hergestellt wird, um Personalisierungsdaten einzubringen. Dies ist notwendig, da zu diesen Anschlussleitungen nach einer Laminierung des Datenträgers ansonsten kein galvanischer Kontakt mehr herstellbar ist.

Aus der Druckschrift WO 00/41333A ist ein Verfahren zur Datenübertragung zwischen einem Lesegerät und einem Datenträgen mit jeweils zwei Koppelfläche bekannt. In der US 2007/024425 A1 wird im Datenträger eine Batterie als koppelfläche verwendet.

Es ist daher die Aufgabe der vorliegenden Erfindung, ein einfaches und effektives Verfahren zum Einbringen von Daten in einen portablen Datenträger sowie einen dazu eingerichteten portablen Datenträger vorzuschlagen.

Diese Aufgabe wird durch ein Verfahren und einen portablen Datenträger mit den Merkmalen der unabhängigen Ansprüche gelöst. Vorteilhafte Ausgestaltungen und Weiterbildungen sind in davon abhängigen Ansprüchen angegeben.

Die vorliegende Erfindung basiert auf dem Grundgedanken, in dem portablen Datenträger ohnehin vorliegende elektrisch leitfähige Flächen als kapazitive Koppelflächen zur Datenübertragung mittels kapazitiver Kopplung einzusetzen.

Bei dem erfindungsgemäßen Verfahren wird zum Übertragen von Daten zwischen einem Lesegerät und einem portablen Datenträger jeweils eine von zumindest zwei kapazitiven Lesegerät-Koppelflächen bei jeweils einer von zwei entsprechenden Datenträger-Koppelflächen angeordnet, so dass jeweils eine Lesegerät-Koppelfläche und eine Datenträger-Koppelfläche einen Kondensator bilden. Zur Übertragung von Daten von dem Lesegerät zu dem Datenträger wird zwischen den beiden Lesegerät-Koppelflächen eine Lesegerät-Differenzspannung angelegt, die von dem Datenträger zwischen den Datenträger-Koppelflächen als eine von der Lesegerät-Differenzspannung abhängige Datenträger-Differenzspannung abgegriffen wird. Dabei nimmt zumindest eine der elektrisch leitfähigen Flächen des Datenträgers, welche als Datenträger-Koppelfläche verwendet wird, im Betrieb des Datenträgers eine Funktion ein, die verschieden von der Funktion einer kapazitiven Koppelfläche ist. Mit anderen Worten übernimmt zumindest eine der beiden eine Koppelfläche bildenden elektrisch leitfähigen Flächen des Datenträgers im Betriebszustand des Datenträgers eine über die Funktion einer kapazitiven Koppelfläche hinausgehende weitere Funktion. Des weiteren werden die beiden Datenträgen-koppelflächen über einen Schwingkreis miteinanden venbunden, der einenseits eine niederohmige galvanische Gleichstnomkopplung, andererseits für die Betriebsfrequenz des Lesegerätes eine Sperrung des Stromflusses zwischen den beiden Datenträger-koppelflächen herstellt. Auf diese Weise kann bei der Herstellung des Datenträgers auf eine separate Datenkommunikationsschnittstelle zumindest teilweise verzichtet werden, da ohnehin in dem Datenträger vorhandene Bauteile zum Ausbilden einer solchen Datenkommunikationsschnittstelle zumindest teilweise verwendet werden können. Somit werden Produktionsaufwand und -kosten vermindert. Weiterhin wird der Datenträger beim Einbringen von Daten in den Datenträger nicht beschädigt, da eine vollwertige kontaktlose Datenkommunikationsschnittstelle zum Einbringen von Daten mittels kapazitiver Kopplung vorliegt. Somit bietet das erfindungsgemäße Verfahren und der erfindungsgemäße Datenträger ein einfaches und effektives Verfahren zum Einbringen von Daten in einen portablen Datenträger.

Vorzugsweise werden mittels des Verfahrens Daten durch das Lesegerät in den Datenträger eingebracht, um den Datenträger, der beispielsweise eine Chipkarte oder eine "SmartCard" sein kann, zu initialisieren und/oder zu personalisieren. Insbesondere Datenträger, die im Betrieb keine Datenkommunikationsschnittstelle benötigen, wie beispielsweise ein OTP-Generator, können auf diese Weise effektiv auf einen Endnutzer personalisiert werden, ohne den Datenträger dazu aufwendig mit einer separaten Datenkommunikationsschnittstelle auszurüsten, die im späteren Betrieb nicht mehr benötigt wird. Auch ein Einbringen von Daten nach der Ausgabe des Datenträgers an den Endkunden kann mit dem Verfahren erfolgen, beispielsweise ein Laden von neuen oder aktualisierten Applikationen.

Als Datenträger-Koppelflächen können eine Reihe von ohnehin in dem Datenträger vorliegenden elektrisch leitfähigen oder metallischen Flächen verwendet werden, z.B. eine Anodenfläche einer Batterie des Datenträgers oder eine Massefläche einer in den Datenträger integrierten Leiterplatte. Aber auch andere Flächen, die in dem Datenträger bereits spezifische Funktionen einnehmen, können die Funktion von Datenträger-Koppelflächen temporär übernehmen, beispielsweise metallische Flächen, die zu Stabilisierungszwecken, z.B. in Verbindung mit einem Display, in dem Datenträger angeordnet sind und dergleichen.

Die Lesegerät-Differenzspannung an den Lesegerät-Koppelflächen wird von einer Signalquelle des Lesegeräts vorzugsweise als hochfrequente Wechselspannung ausgebildet. Die Frequenz der Wechselspannung liegt dabei vorzugsweise im Bereich von einigen 10 kHz bis hin zu einigen 100 MHz. Als Signalquelle kann ein einfacher modulierbarer Signalgenerator, aber auch ein Signalgenerator eines RFID-Lesegeräts verwendet werden.

Die von dem Datenträger als Datenträger-Differenzspannung zwischen den Datenträger-Koppelflächen abgegriffene Differenzspannung kann mittels einer Resonanzüberhöhungseinrichtung vergrößert werden. Als Resonanzüberhöhungseinrichtung, die dann mit den Datenträger-Koppelflächen verbunden ist, eignet sich z.B. ein induktives Bauelement oder ein Schwingkreis.

Die gegebenenfalls vergrößerte hochfrequente Datenträger-Differenzspannung wird mittels einer Gleichrichtereinrichtung des Datenträgers gleichgerichtet. Zu diesem Zweck kann eine Einweggleichrichtereinrichtung, z.B. eine Diode, oder eine Mehrweggleichrichtereinrichtung, z.B. eine Gleichrichterbrücke, verwendet werden.

Um zu gewährleisten, dass die an einem Ausgang der Gleichrichtereinrichtung anliegende Gleichspannung von dem Datenträger verwendungsgemäß interpretiert wird, werden Einflussgrößen und -Faktoren, die die Höhe dieser Gleichspannung beeinflussen, entsprechend ausgebildet. Einflussgrößen sind z.B. der Abstand der beieinander angeordneten Lesegerät- und Datenträger-Koppelflächen, die Größe und Form dieser Koppelflächen und die Frequenz und die Amplitude der Lesegerät-Differenzspannung. Eine oder mehrere dieser Einflussgrößen werden so bestimmt und eingerichtet, dass bei Anliegen einer vorgegebenen Lesegerät-Differenzspannung die entsprechende Gleichspannung durch den Datenträger als logische 1 interpretiert wird. Weiterhin werden die entsprechenden Einflussgrößen derart eingerichtet, dass bei Anliegen einer Wechselspannung, die geringer ist als die vorgegebene Lesegerät-Differenzspannung, oder bei Fehlen einer solchen Wechselspannung die entsprechend abgeleitete Gleichspannung als logische 0 interpretiert wird.

Durch Modulieren der Lesegerät-Differenzspannung durch das Lesegerät gemäß einer vorgegebenen Kodierung können mittels dieser Kodierung kodierte Daten von dem Lesegerät zu dem Datenträger übertragen werden. Die von dem Datenträger abgegriffene Datenträger-Differenzspannung erscheint entsprechend moduliert und wird zu einer modulierten Gleichspannung gleichgerichtet, welche der Datenträger dann demodulieren und als Datensignal interpretieren kann. Eine einfache Form des Modulierens besteht in einem Ein- und Ausschalten der Lesegerät-Differenzspannung im Takt der vorgegebenen Kodierung.

Sollen zusätzlich Daten von dem Datenträger zu dem Lesegerät übertragen werden, so geschieht dies, indem bei anliegender unmodulierter Lesegerät-Differenzspannung von dem Datenträger ein Lastwechsel an der Datenträger-Differenzspannung erzeugt wird. Der Lastwechsel an der Datenträger-Differenzspannung, der beispielsweise mittels eines schaltbaren Widerstandes erzeugt werden kann, wird von dem Lesegerät als eine resultierende Lastmodulation an der Lesegerät-Differenzspannung detektiert. Der Lastwechsel kann wiederum im Takt einer vorgegebenen Kodierung erfolgen, um mittels dieser Kodierung kodierte Daten von dem Datenträger zu dem Lesegerät zu übertragen. Das Lesegerät demoduliert dieses über die Lastmodulation empfangene Datensignal entsprechend zur korrekten Interpretation der empfangenen Daten.

In einer bevorzugten Ausgestaltung ist der Datenträger als Chipkarte mit Display und einer eigenen Energieversorgung, z.B. einer Batterie, ausgebildet. Diese Chipkarte kann beispielsweise zusätzlich eine Eingabeeinrichtung, z.B. eine Tastatur, umfassen und als OTP-Generator zum Erzeugen von Einmalpasswörtem verwendet werden.

Die Erfindung wird nachfolgend mit Bezug auf die beigefügten Zeichnungen beispielhaft beschrieben. Darin zeigen:
- Figur 1: schematisch die an einer bevorzugten Ausführungsform des erfindungsgemäßen Verfahrens beteiligten Kompo- nenten;
- Figuren 2a, 2b, 2c: schematisch Ausschnitte verschiedener Ausführungs- formen eines erfindungsgemäßen Datenträgers;
- Figur 3: eine erste bevorzugte Ausführungsform eines erfin- dungsgemäßen Datenträgers;
- Figur 4: eine zweite bevorzugte Ausführungsform eines erfin- dungsgemäßen Datenträgers; und
- Figur 5: tatsächliche und potentielle Positionen von kapazitiven Koppelflächen einer realen Chipkarte.

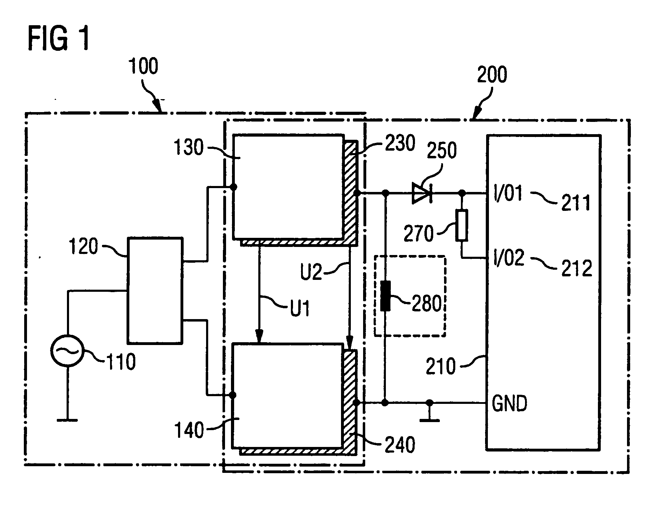

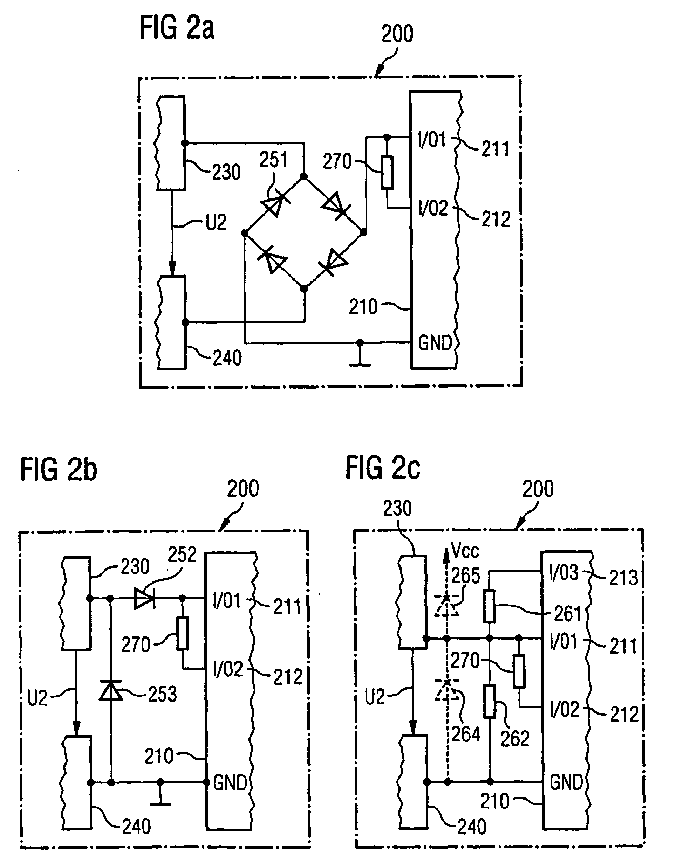

Figur 1 zeigt die an einer bevorzugten Ausführungsform des erfindungsgemäßen Verfahrens beteiligten Komponenten, ein Lesegerät 100 und einen portablen Datenträger 200. Die Figuren 2a, 2b und 2c zeigen Ausschnitte verschiedener Ausführungsformen des Datenträgers 200.

Mit Bezug auf Figur 1 umfasst das Lesegerät 100 eine Signalquelle 110 und kapazitive Lesegerät-Koppelflächen 130,140. Die Signalquelle 110 erzeugt eine hochfrequente Wechselspannung, deren Frequenz im Bereich von einigen 10 kHz bis hin zu einigen 100 MHz liegen kann. Die Signalquelle 110 ist als einfacher, modulierbarer Signalgenerator ausgebildet. Aber auch eine Signalquelle eines RFID-Lesegeräts ("Radio Frequency Identification"), die üblicherweise für eine induktive Kopplung (z.B. mit einer Frequenz von 13,56 MHz) oder eine Backscatter-Kopplung (868 MHz) eingesetzt wird, kann als Signalquelle 110 dienen. Zwischen der Signalquelle 110 und den Lesegerät-Koppelflächen 130, 140 befindet sich ferner ein optionales Anpassnetzwerk 120 zur Impedanzanpassung.

Die Lesegerät-Koppelflächen 130,140 sind räumlich derart angeordnet, dass entsprechende Datenträger-Koppelflächen 230, 240 des Datenträgers 200 genau auf den Lesegerät-Koppelflächen 130,140 zu liegen kommen, wenn der Datenträger 200 entsprechend mit Bezug zu dem Lesegerät 100 positioniert wird. Das Lesegerät 100 kann Positionierungshilfen umfassen, die eine korrekte Positionierung des Datenträgers 200 erleichtern. Solche Positionierungshilfen können z.B. als Anschlagwinkel, Führungsstifte oder dergleichen ausgebildet sein. Die Lesegerät-Koppelflächen 130,140 und gegebenenfalls die Signalquelle 110 des Lesegeräts 100 können mechanisch abgesetzt und mittels Kabelverbindungen mit dem restlichen Lesegerät 100 verbunden sein, um z.B. einen Einbau dieser Komponenten in eine Anlage zum Personalisieren von Datenträgern zu erleichtern.

Der Datenträger 200 ist vorzugsweise als eine Displaychipkarte mit eigener Energieversorgung, z.B. einer Batterie (in Fig. 1 nicht gezeigt), ausgebildet und umfasst einen Halbleiterchip 210 mit freien Ein-/Ausgangsanschlüssen (I/O-Ports) 211 und 212, wobei der Anschluss 212 optional ist. Weiterhin umfasst der Datenträger 200, wie bereits erwähnt, zwei kapazitive Datenträger-Koppelflächen 230, 240. Zumindest eine der Datenträger-Koppelflächen 230, 240 ist mit einer Gleichrichtereinrichtung 250, z.B. einer Diode, verbunden. Handelt es sich, wie in Fig. 1, um eine Einweggleichrichtereinrichtung, so ist die andere Datenträger-Koppelfläche 240, 230 mit einem Bezugspotential, z.B. der Masse (GND) verbunden.

In Fig. 2a ist ein Beispiel für eine Mehrweggleichrichtereinrichtung 251 in Form eines Brückengleichrichters dargestellt. Hierbei sind beide Datenträger-Koppelflächen 230, 240 mit der Mehrweggleichrichtereinrichtung 251 verbunden. Der Ausgang der Gleichrichtereinrichtung 250, 251 wird mit dem freien Ein-/Ausgangsanschluss 211 des Halbleiterchips 210 verbunden. Optional kann am Ausgang der Gleichrichtereinrichtung 250, 251 eine Kapazität (in Fig. 1 und 2 nicht gezeigt) zur Glättung der Ausgangsspannung vorgesehen sein.

Die Figuren 2b und 2c stellen weitere Möglichkeiten zur Anschaltung der Datenträger-Koppelflächen 230, 240 dar. In Figur 2b ist die Verwendung von zwei Dioden 252, 253 dargestellt. Aus einer solchen Verschaltung resultiert eine Verdopplung der Spannung am Ausgang der Diode 252. Diese Variante wird daher vorteilhaft bei kleinen Datenträger-Koppelflächen 230, 240 und daraus resultierend kleinen Koppelkapazitäten eingesetzt.

Eine Schaltungsvariante, die ohne Dioden auskommt, ist in Figur 2c gezeigt. Dabei ist der Ein-/Ausgangsanschluss 211 als so genannter Schmitt-TriggerEingang ausgebildet. Durch einen Spannungsteiler, der aus den Widerständen 261, 262 besteht, wird eine Vorspannung erzeugt, welcher eine nachstehend beschriebene, eingekoppelte, hochfrequente Datenträger-Differenzspannung U2 überlagert ist. Der Widerstand 261 kann dabei mit dem Vcc-Anschluss gekoppelt sein oder bevorzugt wahlweise mit dem Vcc- oder dem GND-Anschluss verbunden werden, um eine Entladung der Batterie des Datenträgers 200 über einen Querstrom über die Widerstande 261, 262 zu verhindern, solange der Widerstand 261 mit dem GND-Anschluss verbunden ist. Um den Ein-/Ausgangsanschluss 211 gegen eine zu hohe eingekoppelte Datenträger-Differenzspannung U2 zu schützen, können optionale Schutzdioden 264, 265 geschaltet werden.

Ein Lastwiderstand 270 ist in der Ausführungsform aus Fig. 1 mit einem Anschluss mit den Ausgang der Gleichrichterreinrichtung 250 und mit dem anderen Anschluss mit einem weitern Ein-/Ausgangsanschluss 212 des Halbleiterchips 210 verbunden. Durch ein Ein- und Ausschalten des Ein-/Ausgangsanschlusses 212 kann auf diese Weise eine Lastmodulation zur Übertragung von Daten von dem Datenträger 200 zu dem Lesegerät 100 erzeugt werden.

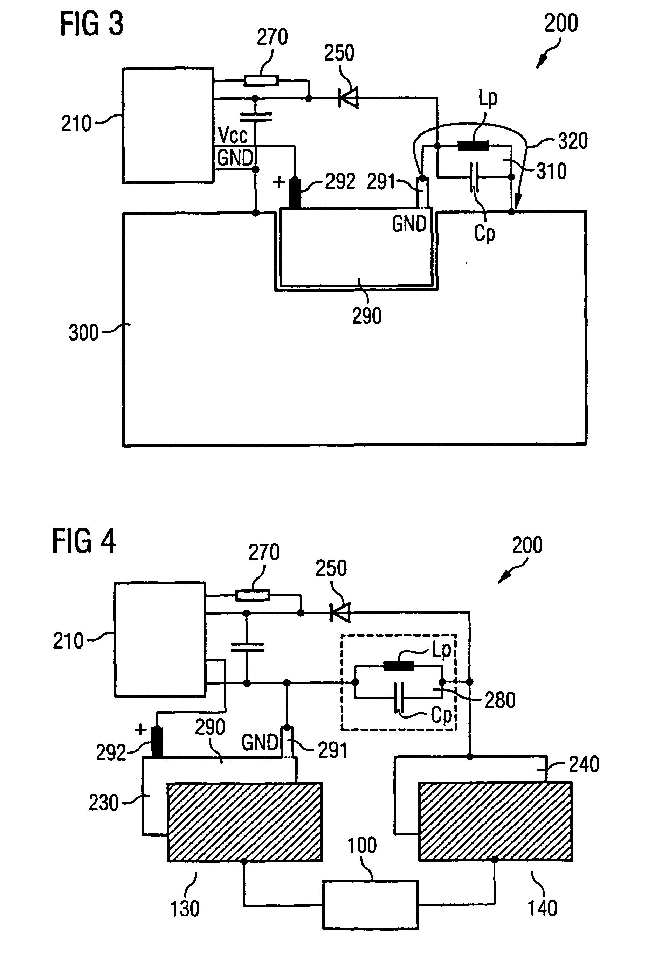

Mittels eines optionalen induktiven Bauelements 280 (oder alternativ mittels eines Schwingkreises 280, siehe Fig. 4), welches jeweils mit den Datenträger-Koppelflächen 230, 240 verbunden ist, kann die eingekoppelte Datenträger-Differenzspannung U2 durch eine Resonanzüberhöhung vergrößert werden.

Um eine Datenübertragung von dem Lesegerät 100 zu dem Datenträger 200 durchzuführen, wird jeweils eine der Lesegerät-Koppelflächen 130,140 und eine der Datenträger-Koppelflächen 230, 240 aufeinander positioniert. Auf diese Weise wird zwischen jeweils zwei Koppelflächen 130, 230; 140, 240 ein Plattenkondensator ausgebildet, wobei die Kondensatorelektroden durch die gegenüberliegenden Koppelflächen 130, 230; 140, 240 gebildet werden. Das Dielektrikum des jeweiligen Plattenkondensators wird durch eine oder mehrere Beschichtungen des Datenträgers 200, z.B. eine Overlay-Folie, eine Lackschicht und dergleichen, sowie einen sich gegebenenfalls ausbildenden Luftspalt gebildet.

Die Lesegerät-Koppelflächen 130,140 werden von der Signalquelle 110 derart gespeist, dass sich eine Lesegerät-Differenzspannung U1 zwischen den beiden Lesegerät-Koppelflächen 130,140 bildet. Hierbei ist es gleichgültig, ob eine der beiden Lesegerät-Koppelflächen 130, 140 auf einen festen Bezugspunkt, z.B. GND, geschaltet ist, oder ob die beiden Lesegerät-Koppelflächen 130,140 gegenüber einem festen Bezugspunkt, z.B. GND, mit einem Differenzsignal (Gegentaktbetrieb) angesteuert werden.

Durch die kapazitive Kopplung zwischen den Lesegerät-Koppelflächen 130, 140 und den Datenträger-Koppelflächen 230, 240 kann zwischen den Datenträger-Koppelflächen 230, 240 eine Datenträger-Differenzspannung U2 abgegriffen werden. Dabei sind sowohl die Lesegerät-Differenzspannung U1 als auch die Datenträger-Differenzspannung U2 hochfrequente Wechselspannungen entsprechend der Frequenz der Signalquelle 110. Nach einer Gleichrichtung der Datenträger-Differenzspannung U2 kann am Ausgang der Gleichrichtereinrichtung 250 eine Gleichspannung gemessen werden. Die Fläche der Koppelflächen 130,140,230,240, der Abstand aufeinander liegender Koppelflächen 130, 230; 140, 240 sowie die Frequenz und die Amplitude der Lesegerät-Differenzspannung U1 sind Einflussgrößen, die eine am Ausgang der Gleichrichtereinrichtung 250 anliegende Gleichspannung in Abhängigkeit von der anliegenden Lesegerät-Differenzspannung U1 beeinflussen. Eine oder mehrere dieser Einflussgrößen werden derart dimensioniert, dass diese Gleichspannung an dem Ein-/Ausgangsanschluss 211 eine logische 1 ergibt, wenn eine vorgegebene Lesegerät-Differenzspannung U1 zwischen den Lesegerät-Koppelflächen 130,140 anliegt. Weiterhin wird die Dimensionierung dieser Einflussgrößen so vorgenommen, dass bei einer Reduktion der Spannung im Vergleich zu der vorgegebenen Lesegerät-Differenzspannung U1 oder einem Fehlen der Spannung die an dem Ein-/Ausgangsanschluss 211 anliegende Gleichspannung eine logische 0 ergibt.

Durch Modulieren (z.B. durch Ein- und Ausschalten) der Lesegerät-Differenzspannung U1 gemäß einer vorgegebenen Kodierung können somit Daten von dem Lesegerät 100 zu dem Datenträger 200 übertragen werden.

Um weiterhin Daten von dem Datenträger 200 zu dem Lesegerät 100 zu übertragen, kann bei anliegender unmodulierter Lesegerät-Differenzspannung U1 der zweite Ein-/Ausgangsanschluss 212 im Takt einer vorgegebenen Kodierung abwechselnd auf 1 oder 0 geschaltet werden. Der sich dadurch mittels des Widerstandes 270 ergebende Lastwechsel an der Datenträger-Differenzspannung U2 kann von dem Lesegerät 100 als Lastmodulation an der Lesegerät-Differenzspannung U1 detektiert werden.

Figur 3 zeigt eine erste bevorzugte Ausführungsform eines erfindungsgemäßen Datenträgers 200. Der Datenträger 200 umfasst dabei eine Batterie 290 und die Anodenfläche 291 der Batterie 290 bildet die erste Datenträger-Koppelfläche 230. Eine Masselage 300, z.B. eine Massefläche einer flexiblen Leiterplatte im Inlay des Datenträgers 200, wird als zweite Datenträger-Koppelfläche 240 verwendet. Eine Induktivität Lp bildet zusammen mit einer Kapazität Cp einen Parallelschwingkreis 310, dessen Resonanzfrequenz der Betriebsfrequenz des Lesegeräts 100 entspricht. Dadurch besitzt die Batterie 290 zum einen eine niederohmige galvanische Gleichstromkopplung 320 mit der Masselage 300, wodurch sich die Masselage 300 und die Anodenfläche 291 der Batterie 290 auf demselben Gleichspannungspotential befinden. Zum anderen sperrt der Schwingkreis 310 einen Stromfluss auf der Betriebsfrequenz des Lesegeräts 100 (da dann der Parallelschwingkreis 310 als Bandsperre wirkt), wodurch sich durch Einkopplung der Lesegerät-Differenzspannung U1 zwischen der Masselage 300 und der Anodenfläche 291 der Batterie 290 die hochfrequente Datenträger-Differenzspannung U2 ausbilden kann. Nach Gleichrichtung der Spannung U2 kann diese von dem Halbleiterchip 210 detektiert werden.

Ein entscheidender Nachteil dieser Anordnung besteht darin, dass sich durch die zwangsweise kapazitive Kopplung zwischen Anoden- und Kathodenanschluss 291, 292 der Batterie 290 an der Kathode 292 der Batterie 290 eine hochfrequente Wechselspannung ausbildet, die der Gleichspannung der Batterie 290 überlagert ist und in der Amplitude annähernd der Datenträger-Differenzspannung U2 entspricht. Dies kann im ungünstigsten Fall dazu führen, dass der Halbleiterchip 210 nicht mehr bestimmungsgemäß funktioniert. Eine Möglichkeit zur Abblockung dieser unerwünschten hochfrequenten Spannung besteht darin, einen weiteren resonanten Parallelschwingkreis (nicht gezeigt) in die Anschlussleitung der Kathode 292 der Batterie 290 einzubringen.

Eine zweite bevorzugte Ausführungsform eines erfindungsgemäßen Datenträgers 200 ist in Figur 4 dargestellt. Auch in dieser Ausführungsform dient die Anodenfläche 291 der Batterie 290 als Datenträger-Koppelfläche 230. Als zweite Datenträger-Koppelfläche 240 wird eine potentialfreie Metallfläche in dem Datenträger 200 verwendet. Dadurch ergibt sich im Vergleich zu der ersten bevorzugten Ausführungsform der Vorteil, dass sich der Anoden- und der Kathodenanschluss 291, 292 der Batterie 290 auf demselben Potential der hochfrequenten Datenträger-Differenzspannung U2 befinden, d.h. es liegt keine Wechselspannung zwischen der Kathode 292 und der Anode 291 an. Zur Anhebung der Datenträger-Differenzspannung U2 ist ein Parallelschwingkreis 280 zwischen den Datenträger-Koppelflächen 230, 240 eingefügt.

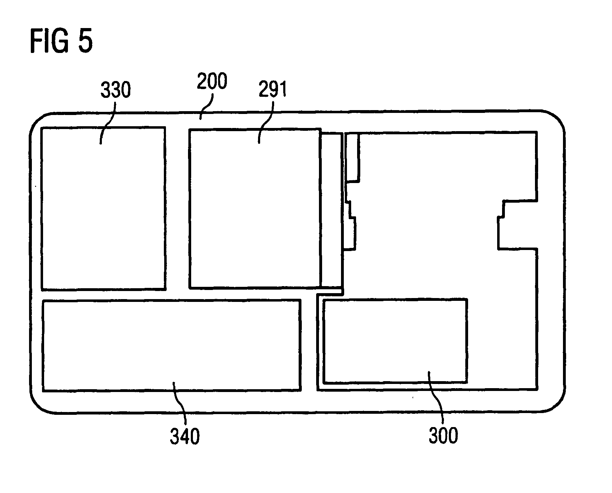

Figur 5 zeigt die mögliche Lage von Datenträger-Koppelflächen 291, 300, 330, 340 am Beispiel eines realen Layouts einer Displaykarte 200. Außer der Anodenanschlussfläche 291 der Batterie 290 und einer Fläche 300 auf einer flexiblen Leiterplatte können beispielsweise auch Flächen 330, 340 durch den Einbau von metallischen Flächen als Datenträger-Koppelflächen ausgestaltet werden.

## Patentansprüche

1. Verfahren zum Übertragen von Daten zwischen einem Lesegerät (100) und einem portablen Datenträger (200) durch Anordnen jeweils einer von zwei kapazitiven Lesegerät-Koppelflächen (130,140) des Lesegeräts (100) bei jeweils einer von zwei entsprechenden kapazitiven Datenträger-Koppelflächen (230, 240) des Datenträgers (200) und Übertragen von Daten von dem Lesegerät (100) zu dem Datenträger (200) durch Anlegen einer Lesegerät-Differenzspannung (U1) zwischen den Lesegerät-Koppelflächen (130,140) und Abgreifen einer von der Lesegerät-Differenzspannung (U1) abhängigen Datenträger-Differenzspannung (U2) zwischen den Datenträger-Koppelflächen (230, 240), wobei zumindest eine elektrisch leitfähige Fläche des Datenträgers (200), welche als Datenträger-Koppelfläche (230, 240) verwendet wird, im Betrieb des Datenträgers (200) eine Funktion einnimmt, die verschieden von der Funktion einer kapazitiven Koppelfläche ist, **dadurch gekennzeichnet, dass** die beiden Datenträger-Koppelflächen (230, 240) über einen Schwingkreis (310) miteinander verbunden werden, der einerseits eine niederohmige galvanische Gleichstromkopplung zwischen den beiden Datenträger-Koppelflächen (230, 240) herstellt und andererseits für die Betriebsfrequenz des Lesegerätes (100) den Stromfluss zwischen den beiden Datenträger-Koppelflächen (230, 240) sperrt.

2. Verfahren nach Anspruch 1, **dadurch gekennzeichnet, dass** der Datenträger (200) mittels der Datenübertragung von dem Lesegerät (100) initialisiert und/ oder personalisiert wird.

3. Verfahren nach Anspruch 1 oder 2, **dadurch gekennzeichnet, dass** eine Anodenfläche (291) einer Batterie (290) des Datenträgers (200) als eine der Datenträger-Koppelflächen (230, 240) verwendet wird.

4. Verfahren nach einem der Ansprüche 1 bis 3, **dadurch gekennzeichnet, dass** eine Massefläche (300) einer Leiterplatte des Datenträgers (200) als eine der Datenträger-Koppelflächen (230, 240) verwendet wird.

5. Verfahren nach einem der Ansprüche 1 bis 4, **dadurch gekennzeichnet, dass** die Lesegerät-Differenzspannung (U1) von einer Signalquelle (110) des Lesegeräts (100) als hochfrequente Wechselspannung erzeugt wird.

6. Verfahren nach Anspruch 5, **dadurch gekennzeichnet, dass** die als hochfrequente Wechselspannung zwischen den Datenträger-Koppelflächen (230, 240) abgegriffene Datenträger-Differenzspannung (U2) mittels einer Resonanzüberhöhungseinrichtung (280) des Datenträgers (200) vergrößert wird.

7. Verfahren nach Anspruch 5 oder 6, **dadurch gekennzeichnet, dass** die als hochfrequente Wechselspannung zwischen den Datenträger-Koppelflächen (230, 240) abgegriffene Datenträger-Differenzspannung (U2) mittels einer Gleichrichtereinrichtung (250; 251; 252, 253) des Datenträgers (200) gleichgerichtet wird.

8. Verfahren nach Anspruch 7, **dadurch gekennzeichnet, dass** der Abstand der jeweils beieinander angeordneten Lesegerät- und Datenträger-Koppelflächen (130, 230; 140, 240) und/ oder die Fläche der Lesegerät- und Datenträger-Koppelflächen (130,140; 230, 240) und/ oder die Frequenz der Lesegerät-Differenzspannung (U1) und/ oder die Amplitude der Lesegerät-Differenzspannung (U1) derart ausgebildet wird, dass bei einer anliegenden, vorgegebenen Lesegerät-Differenzspannung (U1) eine an einem Ausgang der Gleichrichtereinrichtung (250; 251; 252, 253) anliegende Gleichspannung als logische 1 interpretiert wird und bei einer anliegenden, gegenüber der vorgegebenen Lesegerät-Differenzspannung (U1) reduzierten oder fehlenden Lesegerät-Differenzspannung (U1) als logische 0 interpretiert wird.

9. Verfahren nach Anspruch 8, **dadurch gekennzeichnet, dass** durch Modulieren der Lesegerät-Differenzspannung (U1) gemäß einer vorgegebenen Kodierung Daten über die entsprechend modulierte Datenträger-Differenzspannung (U2) von dem Lesegerät (100) zu dem Datenträger (200) übertragen werden.

10. Verfahren nach einem der Ansprüche 5 bis 9, **gekennzeichnet durch** ein Übertragen von Daten von dem Datenträger (200) zu dem Lesegerät (100), indem bei Anliegen einer unmodulierten Lesegerät-Differenzspannung (U1) von dem Datenträger (200) ein Lastwechsel an der Datenträger-Differenzspannung (U2) gemäß einer vorgegebenen Kodierung erzeugt wird und das Lesegerät (100) eine aus dem Lastwechsel resultierende Lastmodulation an der Lesegerät-Differenzspannung (U1) detektiert.

11. Verfahren nach Anspruch 10, **dadurch gekennzeichnet, dass** der Lastwechsel mittels eines schaltbaren Widerstandes (270, 212) erzeugt wird.

12. Portabler Datenträger (200) mit zwei kapazitiven Koppelflächen (230, 240), wobei die Koppelflächen (230, 240) zur kapazitiven Kopplung des Datenträgers (200) mit einem Lesegerät (100) zur Datenübertragung zwischen dem Lesegerät (100) und dem Datenträger (200) eingerichtet sind und der Datenträger (200) eingerichtet ist, eine zwischen den Koppelflächen (230, 240) anliegende Differenzspannung (U2) abzugreifen und als ein Datensignal zu interpretieren, wobei zumindest eine der als Koppelflächen (230, 240) verwendeten elektrisch leitfähigen Flächen des Datenträgers (200) eingerichtet ist, im Betrieb des Datenträgers (200) eine über die bloße Funktion einer kapazitiven Koppelfläche hinausgehende Funktion einzunehmen, **dadurch gekennzeichnet, daß** die beiden Datenträger-Koppelflächen (230, 240) über einen Schwingkreis (310) miteinander verbunden sind, der einerseits eine niederohmige galvanische Gleichstromkopplung zwischen den beiden Datenträger-Koppelflächen (230, 240) herstellt und andererseits für die Betriebsfrequenz des Lesegerätes (100) den Stromfluß zwischen den beiden Datenträger-Koppelflächen (230, 240) sperrt.

13. Datenträger (200) nach Anspruch 12, **dadurch gekennzeichnet, dass** der Datenträger (200) eingerichtet ist, durch das Datensignal Initialisierungsdaten und/oder Personalisierungsdaten zu empfangen.

14. Datenträger (200) nach Anspruch 12 oder 13, **dadurch gekennzeichnet, dass** der Datenträger (200) eine Batterie (290) mit einer Anodenfläche (291) umfasst, wobei die Anodenfläche (291) eine Koppelfläche (230, 240) bildet.

15. Datenträger (200) nach einem der Ansprüche 12 bis 14, **dadurch gekennzeichnet, dass** der Datenträger (200) eine Leiterplatte mit einer Massefläche (300) umfasst, wobei die Massefläche (300) eine Koppelfläche (230, 240) bildet.

16. Datenträger (200) nach einem der Ansprüche 12 bis 15, **gekennzeichnet durch** eine Resonanzüberhöhungseinrichtung (280), die eingerichtet ist, eine als hochfrequente Wechselspannung zwischen den Koppelflächen (230, 240) abgegriffene Differenzspannung (U2) zu vergrößern.

17. Datenträger (200) nach einem der Ansprüche 12 bis 16, **gekennzeichnet durch** eine Gleichrichtereinrichtung (250; 251; 252, 253), die eingerichtet ist, eine als hochfrequente Wechselspannung zwischen den Koppelflächen (230, 240) abgegriffene Differenzspannung (U2) gleichzurichten.

18. Datenträger (200) nach einem der Ansprüche 12 bis 17, **gekennzeichnet durch** eine Lastmodulationseinrichtung (270, 212), die eingerichtet ist, einen Lastwechsel an der Differenzspannung (U2) zu erzeugen.

## Claims

1. A method for transferring data between a reading device (100) and a portable data carrier (200) by arranging respectively one of two capacitive reading device coupling faces (130, 140) of the reading device (100) at respectively one of two corresponding capacitive data carrier coupling faces (230, 240) of the data carrier (200) and transferring data from the reading device (100) to the data carrier (200) by applying a reading device differential voltage (U1) between the reading device coupling faces (130, 140) and tapping a data carrier differential voltage (U2) dependent on the reading device differential voltage (U1) between the data carrier coupling faces (230, 240), wherein at least one electrically conductive face of the data carrier (200) which is employed as a data carrier coupling face (230, 240) assumes, during operation of the data carrier (200), a function which is different from the function of a capacitive coupling face, **characterized in that** the two data carrier coupling faces (230, 240) are interconnected via an oscillator circuit (310) which produces a low-impedance galvanic direct-current coupling between the two data carrier coupling faces (230, 240), on the one hand, and blocks the current flow between the two data carrier coupling faces (230, 240) for the operating frequency of the reading device (100), on the other hand.

2. The method according to claim 1, **characterized in that** the data carrier (200) is initialized and/or personalized by means of the data transfer from the reading device (100).

3. The method according to claim 1 or 2, **characterized in that** an anode face (291) of a battery (290) of the data carrier (200) is employed as one of the data carrier coupling faces (230, 240).

4. The method according to any of claims 1 to 3, **characterized in that** a ground plane (300) of a circuit board of the data carrier (200) is employed as one of the data carrier coupling faces (230, 240).

5. The method according to any of claims 1 to 4, **characterized in that** the reading device differential voltage (U1) is generated as high-frequency alternating voltage by a signal source (110) of the reading device (100).

6. The method according to claim 5, **characterized in that** the data carrier differential voltage (U2) tapped as high-frequency alternating voltage between the data carrier coupling faces (230, 240) is magnified by means of a resonance step-up device (280) of the data carrier (200).

7. The method according to claim 5 or 6, **characterized in that** the data carrier differential voltage (U2) tapped as high-frequency alternating voltage between the data carrier coupling faces (230, 240) is rectified by means of a rectifier device (250; 251; 252, 253) of the data carrier (200).

8. The method according to claim 7, **characterized in that** the distance between the reading device coupling faces and data carrier coupling faces (130, 230; 140, 240) respectively arranged close together and/or the face of the reading device coupling faces and data carrier coupling faces (130, 140; 230, 240) and/or the frequency of the reading device differential voltage (U1) and/or the amplitude of the reading device differential voltage (U1) is configured such that a DC voltage applied to an output of the rectifier device (250; 251; 252, 253) is interpreted as logic 1 in case of an applied, specified reading device differential voltage (U1), and is interpreted as logic 0 in case of an applied reading device differential voltage (U1) that is reduced relative to the specified reading device differential voltage (U1) or is absent.

9. The method according to claim 8, **characterized in that** by modulation of the reading device differential voltage (U1) according to a specified coding, data are transferred from the reading device (100) to the data carrier (200) via the accordingly modulated data carrier differential voltage (U2).

10. The method according to any of claims 5 to 9, **characterized by** a transfer of data from the data carrier (200) to the reading device (100) by a load change being generated on the data carrier differential voltage (U2) according to a specified coding by the data carrier (200) upon application of an unmodulated reading device differential voltage (U1), and the reading device (100) detecting a load modulation, resulting from the load change, on the reading device differential voltage (U1)

11. The method according to claim 10, **characterized in that** the load change is generated by means of a switchable resistor (270, 212).

12. A portable data carrier (200) with two capacitive coupling faces (230, 240), wherein the coupling faces (230, 240) are adapted for capacitive coupling of the data carrier (200) with a reading device (100) for data transfer between the reading device (100) and the data carrier (200), and the data carrier (200) is adapted to tap a differential voltage (U2) applied between the coupling faces (230, 240) and to interpret it as a data signal, wherein at least one of the electrically conductive faces of the data carrier (200) employed as coupling faces (230, 240) is adapted to assume, during operation of the data carrier (200), a function going beyond the mere function of a capacitive coupling face, **characterized in that** the two data carrier coupling faces (230, 240) are interconnected via an oscillator circuit (310) which produces a low-impedance galvanic direct current coupling between the two data carrier coupling faces (230, 240), on the one hand, and blocks the current flow between the two data carrier coupling faces (230, 240) for the operating frequency of the reading device (100), on the other hand.

13. The data carrier (200) according to claim 12, **characterized in that** the data carrier (200) is adapted to receive initialization data and/or personalization data through the data signal.

14. The data carrier (200) according to claim 12 or 13, **characterized in that** the data carrier (200) comprises a battery (290) having an anode face (291), whereby the anode face (291) forms a coupling face (230, 240).

15. The data carrier (200) according to any of claims 12 to 14, **characterized in that** the data carrier (200) comprises a circuit board having a ground plane (300), whereby the ground plane (300) forms a coupling face (230, 240).

16. The data carrier (200) according to any of claims 12 to 15, **characterized by** a resonance step-up device (280) which is adapted to magnify a differential voltage (U2) tapped as high-frequency alternating voltage between the coupling faces (230, 240).

17. The data carrier (200) according to any of claims 12 to 16, **characterized by** a rectifier device (250; 251; 252, 253) which is adapted to rectify a differential voltage (U2) tapped as high-frequency alternating voltage between the coupling faces (230, 240).

18. The data carrier (200) according to any of claims 12 to 17, **characterized by** a load modulation device (270, 212) which is adapted to generate a load change on the differential voltage (U2).

## Revendications

1. Procédé de transmission de données entre un appareil de lecture (100) et un support de données portable (200) par agencement de respectivement une de deux surfaces de couplage capacitives d'appareil de lecture (130, 140) de l'appareil de lecture (100) sur respectivement une de deux surfaces de couplage capacitives de support de données correspondantes (230, 240) du support de données (200) et transmission de données de l'appareil de lecture (100) au support de données (200) par application d'une tension différentielle d'appareil de lecture (U1) entre les surfaces de couplage d'appareil de lecture (130, 140) et prélèvement d'une tension différentielle de support de données (U2) dépendante de la tension différentielle d'appareil de lecture (U1) entre les surfaces de couplage de support de données (230, 240), au moins une surface électroconductrice du support de données (200) utilisée en tant que surface de couplage de support de données (230, 240) adoptant lors du fonctionnement du support de données (200) une fonction qui est différente de la fonction d'une surface de couplage capacitive, **caractérisé en ce que** les deux surfaces de couplage de support de données (230, 240) sont reliées entre elles par l'intermédiaire d'un circuit oscillant (310) qui d'une part crée un couplage en courant continu galvanique à faible impédance entre les deux surfaces de couplage de support de données (230, 240) et qui d'autre part bloque l'écoulement du courant entre les deux surfaces de couplage de support de données (230, 240) pour la fréquence de fonctionnement de l'appareil de lecture (100).

2. Procédé selon la revendication 1, **caractérisé en ce que** le support de données (200) est initialisé et/ou personnalisé par l'appareil de lecture (100) au moyen de la transmission de données.

3. Procédé selon la revendication 1 ou 2, **caractérisé en ce qu'**une surface d'anode (291) d'une pile (290) du support de données (200) est utilisée en tant qu'une des surfaces de couplage de support de données (230, 240).

4. Procédé selon une des revendications de 1 à 3, **caractérisé en ce qu'**une surface de masse (300) d'un circuit imprimé du support de données (200) est utilisée en tant qu'une des surfaces de couplage de support de données (230, 240).

5. Procédé selon une des revendications de 1 à 4, **caractérisé en ce que** la tension différentielle de l'appareil de lecture (U1) est générée par une source de signaux (110) de l'appareil de lecture (100) sous forme de tension alternative de haute fréquence

6. Procédé selon la revendication 5, **caractérisé en ce que** la tension différentielle du support de données (U2) prélevée sous forme de tension alternative de haute fréquence entre les surfaces de couplage de support de données (230, 240) est augmentée au moyen d'un équipement de surélévation de résonance (280) du support de données (200).

7. Procédé selon la revendication 5 ou 6, **caractérisé en ce que** la tension différentielle du support de données (U2) prélevée sous forme de tension alternative de haute fréquence entre les surfaces de couplage de support de données (230, 240) est redressée au moyen d'un équipement de redresseur (250; 251; 252, 253) du support de données (200).

8. Procédé selon la revendication 7, **caractérisé en ce que** l'espacement des surfaces de couplage d'appareil de lecture et de support de données (130, 230;140, 240) respectivement agencées de manière rapprochée et/ou la surface des surfaces de couplage d'appareil de lecture et de support de données (130, 140; 230; 240) et/ou la fréquence de la tension différentielle de l'appareil de lecture (U1) et/ou l'amplitude de la tension différentielle de l'appareil de lecture (U1) est réalisé(e) de telle manière qu'une tension continue appliquée à une sortie de l'équipement de redresseur (250; 251; 252, 253) est interprétée comme logique 1 lors d'une tension différentielle d'appareil de lecture (U1) donnée appliquée et est interprétée comme logique 0 lors d'une tension différentielle d'appareil de lecture (U1) appliquée réduite ou manquante par rapport à la tension différentielle d'appareil de lecture (U1) donnée.

9. Procédé selon la revendication 8, **caractérisé en ce que**, par modulation de la tension différentielle de l'appareil de lecture (U1) selon un codage donné, des données sont transmises de l'appareil de lecture (100) au support de données (200) par l'intermédiaire de la tension différentielle du support de données (U2) modulée de manière correspondante.

10. Procédé selon une des revendications de 5 à 9, **caractérisé par** une transmission de données du support de données (200) à l'appareil de lecture (100), par le fait que, quand une tension différentielle de l'appareil de lecture (U1) non modulée est appliquée, une alternance de charge est générée selon un codage donné par le support de données (200) à la tension différentielle du support de données (U2), et par le fait que l'appareil de lecture (100) détecte à la tension différentielle de l'appareil de lecture (U1) une modulation de charge résultant de l'alternance de charge.

11. Procédé selon la revendication 10, **caractérisé en ce que** l'alternance de charge est générée au moyen d'une résistance commutable (270, 212).

12. Support de données portable (200) comprenant deux surfaces de couplage capacitives (230, 240), les surfaces de couplage (230, 240) étant conçues pour le couplage capacitif du support de données (200) avec un appareil de lecture (100) pour la transmission de données entre l'appareil de lecture (100) et le support de données (200), et le support de données (200) étant conçu pour prélever et interpréter en tant que signal de données une tension différentielle (U2) appliquée entre les surfaces de couplage (230, 240), au moins une des surfaces électroconductrices du support de données (200) utilisées en tant que surfaces de couplage (230, 240) étant conçue pour adopter lors du fonctionnement du support de données (200) une fonction dépassant la simple fonction d'une surface de couplage capacitive, **caractérisé en ce que** les deux surfaces de couplage de support de données (230, 240) sont reliées entre elles par l'intermédiaire d'un circuit oscillant (310) qui d'une part crée un couplage en courant continu galvanique à faible impédance entre les deux surfaces de couplage de support de données (230, 240) et qui d'autre part bloque l'écoulement du courant entre les deux surfaces de couplage de support de données (230, 240) pour la fréquence de fonctionnement de l'appareil de lecture (100).

13. Support de données (200) selon la revendication 12, **caractérisé en ce que** le support de données (200) est configuré pour recevoir par le signal de données des données d'initialisation et/ou de personnalisation.

14. Support de données (200) selon la revendication 12 ou 13, **caractérisé en ce que** le support de données (200) comprend une pile (290) comportant une surface d'anode (291), la surface d'anode (291) constituant une surface de couplage (230, 240).

15. Support de données (200) selon une des revendications de 12 à 14, **caractérisé en ce que** le support de données (200) comprend un circuit imprimé comportant une surface de masse (300), la surface de masse (300) constituant une surface de couplage (230, 240).

16. Support de données (200) selon une des revendications de 12 à 15, **caractérisé par** un équipement de surélévation de résonance (280) qui est conçu pour augmenter une tension différentielle (U2) prélevée sous forme de tension alternative de haute fréquence entre les surfaces de couplage (230, 240).

17. Support de données (200) selon une des revendications de 12 à 16, **caractérisé par** un équipement de redresseur (250; 251; 252, 253) qui est conçu pour redresser une tension différentielle (U2) prélevée sous forme de tension alternative de haute fréquence entre les surfaces de couplage (230, 240).

18. Support de données (200) selon une des revendications de 12 à 17, **caractérisé par** un équipement de modulation de charge (270, 212) qui est conçu pour générer une alternance de charge à la tension différentielle (U2).
